# EUROPÄISCHE PATENTSCHRIFT

(11) **EP 3 293 080 B1**
(45) Veröffentlichungstag und Bekanntmachung des Hinweises auf die Patenterteilung: **25.09.2019**
(21) Anmeldenummer: 17168177.8
(22) Anmeldetag: 26.04.2017
(51) Int. Cl.: B62D 21/12, B62D 65/02, F16B 19/02

(54) **LANDWIRTSCHAFTLICHE ARBEITSMASCHINE**
AGRICULTURAL WORK MACHINE
ENGIN AGRICOLE

(30) Priorität: 09.09.2016 DE 102016117000
(43) Veröffentlichungstag der Anmeldung: 14.03.2018
(73) Patentinhaber: CLAAS Tractor S.A.S., 78141 Vélizy-Villacoublay Cedex (FR)
(72) Erfinder: Dussere, Thibaut, 92150 Suresnes (FR); Vallee, Sébastien, 78170 La Celle Saint Cloud (FR)
(74) Vertreter: CLAAS Gruppe

(56) Entgegenhaltungen:
- EP-A1- 2 708 761
- DE-A1-102008 021 905
- NL-A- 7 611 626
- US-A1- 2013 322 985

## Beschreibung

Die Erfindung betrifft eine landwirtschaftliche Arbeitsmaschine, insbesondere einen Traktor, mit einem Fahrgestell gemäß dem Oberbegriff des Anspruches 1, sowie ein Verfahren zur Demontage einer Baugruppe eines Fahrgestells gemäß Anspruch 7.

Moderne landwirtschaftliche Arbeitsmaschinen wie Traktoren weisen üblicherweise ein Fahrgestell auf, welches zumindest zum Teil durch mehrere miteinander verbundene Baugruppen gebildet wird. Baugruppen können dabei beispielsweise ein Antriebsmotor oder ein Getriebe der Arbeitsmaschine sein. Derart miteinander verbundene Baugruppen bilden einen Teil des Fahrgestells und tragen wesentlich zu dessen Steifigkeit und Tragfähigkeit bei. Bekannt ist auch, eine Ölwanne, welche einen Teil der Baugruppe "Antriebsmotor" bilden kann, derart mit dem Antriebsmotor und zumindest einer angrenzenden Baugruppe zu verbinden, dass diese ebenfalls ein tragendes Bauteil des Fahrgestells der Arbeitsmaschine bildet. Verbindungsmittel zum Verbinden von Bauteilen sind aus der NL7611626A und der DE102008021905A1 bekannt.

Eine derartig mit einem Antriebsmotor verbundene Ölwanne ist aus der DE 699 29 394 T2 bekannt. Hierbei sind ein Motorblock und eine Ölwanne miteinander und mit einer Vorderradaufhängung verschraubt. Der Motor bildet dabei einen Teil des Fahrgestells des Traktors, wobei die Vorderradaufhängung eine vordere Fortsetzung des Fahrgestells bildet, an der unter anderem die Vorderräder und deren Lenkungsmechanismus befestig sind. Zum Ausgleich von Toleranzen in Längsrichtung des Traktors ist zwischen der Vorderradaufhängung und der Ölwanne ein Spalt vorgesehen, welcher durch den Einsatz von in der Vorderachsaufhängung angeordneten Hülsen überbrückt wird, um so bei der Montage einen Toleranzausgleich vornehmen zu können. Nachteilig ist hierbei, dass ein Toleranzausgleich zwischen den Bauteilen zwar in Längsrichtung vorgenommen werden kann, jedoch keine Ausrichtung der Bauteile zueinander in einer Richtung quer zu der Längsrichtung, wodurch beispielsweise eine genaue Ausrichtung einer Frontzapfwelle erschwert wird. Zudem wird durch den festen Einbau und die Anordnung der Hülsen eine Demontage einzelner Bauteile des Fahrgestells ohne Demontage des gesamten Fahrgestells unmöglich gemacht.

Es ist daher die Aufgabe der vorliegenden Erfindung, eine Vorrichtung und ein Verfahren bereitzustellen, welche eine verbesserte Montage und Wartung einer landwirtschaftlichen Arbeitsmaschine ermöglichen.

Die Lösung der Aufgabe erfolgt erfindungsgemäß durch die kennzeichnenden Merkmale der Ansprüche 1 und 7. Vorteilhafte Ausgestaltungen der Erfindung sind in den Unteransprüchen angegeben.

Eine landwirtschaftliche Arbeitsmaschine, insbesondere ein Traktor, umfasst ein Fahrgestell, welches mindestens eine erste Baugruppe und eine zweite Baugruppe aufweist, wobei eine Baugruppe jeweils mindestens ein Bauteil umfasst, und wobei das Fahrgestell mindestens ein Zentriermittel aufweist, welches in einem montierten Zustand des Fahrgestells in einer Zentrierposition zwischen zwei aneinander angeordneten, und insbesondere lösbar miteinander verbundenen, Baugruppen angeordnet ist, wobei in der Zentrierposition das Zentriermittel jeweils zumindest teilweise in den aneinander angeordneten Baugruppen in dafür ausgebildeten Aussparungen aufgenommen ist. Gemäß der Erfindung ist das Zentriermittel in dem montierten Zustand des Fahrgestells von der Zentrierposition in eine Demontageposition verbringbar, in welcher das Zentriermittel nur in einer der Baugruppen aufgenommen ist. Durch das Zentriermittel kann bei einer Montage des Fahrgestells eine präzisere Ausrichtung der Baugruppen, insbesondere quer zu einer Längsrichtung des Fahrgestells und/oder der Arbeitsmaschine, zueinander erfolgen. Das Verbringen des Zentriermittels in die Demontageposition bei montiertem Fahrgestell ermöglicht darüber hinaus eine Demontage einzelner Bauteile einer Baugruppe, beispielsweise der Ölwanne, ohne dass die zugeordnete Baugruppe oder das Fahrgestell vollständig demontiert werden müssen. Dies hat den Vorteil, dass neben einer verbesserten Montage durch präzisere Ausrichtung der Baugruppen zueinander auch eine einfachere Wartung einer landwirtschaftlichen Arbeitsmaschine gewährleistet werden kann.

In einer bevorzugten Ausgestaltung der Erfindung ist eine Aussparung zur vollständigen Aufnahme des Zentriermittels in einer der Baugruppen als Durchgangsbohrung ausgebildet. Durch die Ausgestaltung der Aussparung zur vollständigen Aufnahme des Zentriermittels als Durchgangsbohrung durch ein Bauteil und/oder eine Baugruppe, kann zusammen mit dem Zugang zu dem Zentriermittel auch kostengünstig die Aussparung zur vollständigen Aufnahme des Zentriermittels gefertigt werden.

In einer besonders bevorzugten Ausgestaltung der Erfindung weist das Zentriermittel radial innenseitig und/oder endseitig ein Verbindungsprofil auf, durch welches das Zentriermittel mit einer Ziehvorrichtung verbindbar ist. Das Verbindungsprofil des Zentriermittels ermöglicht eine, insbesondere kraftschlüssige und/oder formschlüssige, Verbindung des Zentriermittels mit einer Ziehvorrichtung. Dies bietet den Vorteil, dass das Zentriermittel axial in beide Richtungen verlagerbar ist, also beispielsweise nicht nur in eine Richtung geschlagen sondern auch mit der Ziehvorrichtung in die Demontageposition gezogen werden kann.

In einer weiteren bevorzugten Ausgestaltung der Erfindung weist das Zentriermittel einen zumindest teilweise rotationssymmetrisch ausgebildeten Querschnitt auf, und ist insbesondere in Form einer Hülse oder eines Zylinderstiftes ausgebildet. Aufgrund der rotationssymmetrischen Form können sowohl das Zentriermittel als auch die Aussparungen kostengünstig hergestellt werden. Zudem bietet der Einsatz von beispielsweise standardisierten Hülsen oder Zylinderstiften die Möglichkeit Kosten weiter zu reduzieren.

Vorteilhafterweise weist das Zentriermittel einen zumindest teilweise rotationsunsymmetrisch ausgebildeten Querschnitt auf. Entlang seiner Längserstreckung kann ein Zentriermittel zumindest abschnittsweise einen rotationsunsymmetrischen Querschnitt aufweisen. Dieser rotationsunsymmetrische Querschnitt kann mit einer entsprechend ausgebildeten Aussparung zusammenwirken, wodurch eine Rotation des Zentriermittels um eine Längsachse durch Formschluss mit der Aussparung, insbesondere bei einer Verlagerung, vermieden werden kann. Dies hat den Vorteil, dass eine Verlagerung des Zentriermittels auch mit einer einfachen Ziehvorrichtung erfolgen kann.

In einer weiterhin bevorzugten Ausführungsform ist das Zentriermittel in einem montierten Zustand des Fahrgestells von der Demontageposition in die Zentrierposition verlagerbar. Durch eine Verlagerung des Zentriermittels in die Zentrierposition kann eine präzise Ausrichtung beispielsweise eines ausgebauten oder ausgetauschten Bauteils erfolgen, bevor dieses vollständig an den angrenzenden Baugruppen befestigt wird.

Dies hat den Vorteil, dass auch nach einem Austausch oder einer Reparatur ein Bauteil so präzise wie bei der Erstmontage ausgerichtet werden kann, wodurch beispielsweise ein erhöhter Verschleiß aufgrund einer unpräzisen Ausrichtung vermieden werden kann.

In einer weiteren vorteilhaften Ausgestaltung der Erfindung ist die Ziehvorrichtung in Form einer Gewindestange, einer Schraube oder in Form eines Abziehwerkzeuges, insbesondere mit einem Schlaggriff, ausgebildet. Eine einfache Ziehvorrichtung kann beispielsweise eine Schraube oder eine Gewindestange mit einer Mutter sein, welche form- und/oder kraftschlüssig mit dem Zentriermittel verbunden ist. Dies hat den Vorteil, dass ohne spezielle Werkzeuge eine Verlagerung des Zentriermittels erfolgen kann. Ein sogenanntes Abziehwerkzeug, insbesondere mit einem Schlaggriff, welches kraft- und/oder formschlüssig mit einem Zentriermittel verbunden werden kann, hat den Vorteil, dass eine Verlagerung des Zentriermittels ohne großen Zeitaufwand erfolgen kann.

Weiterhin betrifft die Erfindung ein Verfahren zur Demontage einer Baugruppe oder eines Bauteils einer Baugruppe eines Fahrgestells einer landwirtschaftlichen Arbeitsmaschine, umfassend die Schritte Verbinden einer Ziehvorrichtung mit jeweils einem in einer Zentrierposition angeordneten Zentriermittel eines Fahrgestells einer landwirtschaftlichen Arbeitsmaschine; Verlagern des mindestens einen Zentriermittels von der Zentrierposition in eine Demontageposition; und Demontieren der Baugruppe und/oder des Bauteils der Baugruppe. Durch das Zentriermittel kann bei einer Montage des Fahrgestells eine präzisere Ausrichtung der Baugruppen, insbesondere quer zu einer Längsrichtung des Fahrgestells und/oder der Arbeitsmaschine, zueinander erfolgen. Das Verbringen des Zentriermittels in die Demontageposition bei montiertem Fahrgestell hat darüber hinaus den Vorteil, dass eine Demontage einzelner Bauteile einer Baugruppe, beispielsweise der Ölwanne, erfolgen kann, ohne dass die zugeordnete Baugruppe oder das Fahrgestell vollständig demontiert werden müssen.

In einer vorteilhaften Weiterbildung des Verfahrens sind ein Verbinden einer Ziehvorrichtung mit jeweils einem in einer Demontageposition angeordneten Zentriermittel des montierten Fahrgestells und ein Verlagern des mindestens einen Zentriermittels von der Demontageposition in die Zentrierposition vorgesehen. Dies hat den Vorteil, dass auch nach einem Austausch oder einer Reparatur ein Bauteil so präzise wie bei der Erstmontage ausgerichtet werden kann.

Nachfolgend wird die Erfindung unter Bezugnahme auf die anliegenden Zeichnungen näher erläutert.

Es zeigt:
- Fig. 1:: eine schematische Seitenansicht eines Fahrgestells einer landwirtschaftlichen Arbeitsmaschine;
- Fig. 2a,b:: eine schematische Darstellung einer ersten Baugruppe und einer zweiten Baugruppe eines Fahrgestells;
- Fig. 3a:: eine schematische Schnittansicht eines Zentriermittels in einer Zentrierposition; und
- Fig. 3b:: eine schematische Schnittansicht eines Zentriermittels aus Fig. 3a in einer Demontageposition.

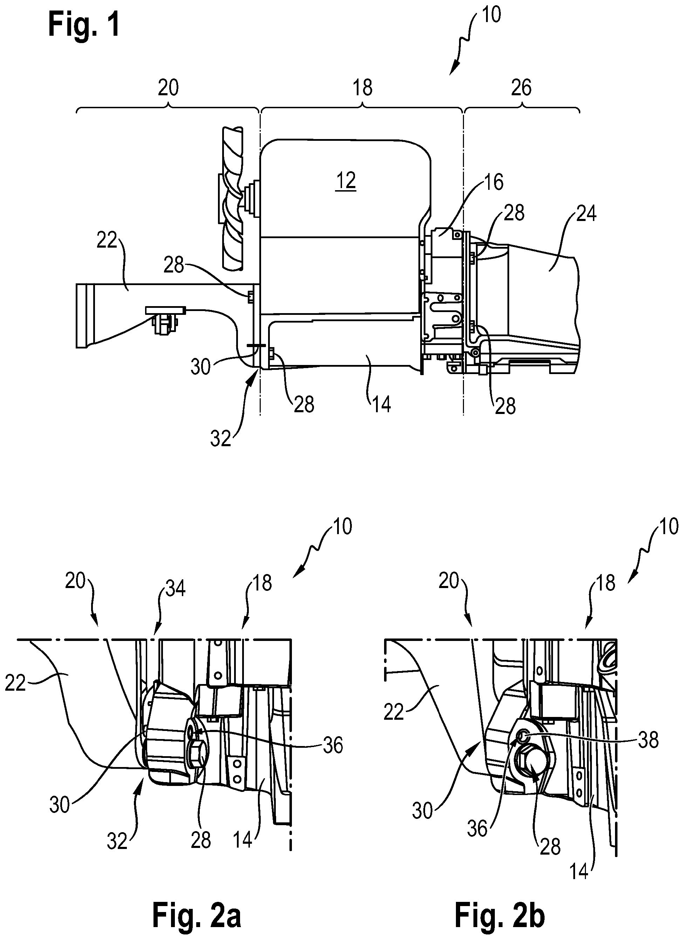

In Fig. 1 ist in einer Seitenansicht ein Fahrgestell 10 einer erfindungsgemäßen landwirtschaftlichen Arbeitsmaschine in Form eines Traktors dargestellt. Die Arbeitsmaschine weist einen Antriebsmotor 12 auf, welcher bodenseitig mit einer Ölwanne 14 und rückseitig mit einem Kupplungsgehäuse 16 verbunden ist. Der Antriebsmotor 12, die Ölwanne 14 und das Kupplungsgehäuse 16 bilden dabei eine erste Baugruppe 18 des Fahrgestells 10. Der Antriebsmotor 12, die Ölwanne 14 und das Kupplungsgehäuse 16 sind dabei Bauteile der ersten Baugruppe 18. Eine zweite Baugruppe 20 des Fahrgestells 10 wird durch eine Vorderachsbaugruppe gebildet, von der lediglich ein Frontrahmen 22 dargestellt ist, an dem beispielsweise eine Vorderachse der Arbeitsmaschine angeordnet sein kann. Rückseitig der ersten Baugruppe 18 ist ein Getriebeblock 24 angeordnet, welcher eine dritte Baugruppe 26 des Fahrgestells 10 bildet. Die Baugruppen 18, 20, 26 sind lösbar miteinander verbunden, beispielsweise durch Schraubverbindungen 28, und bilden einen tragenden Teil des Fahrgestells 10. Die zweite Baugruppe 20 ist dabei derart an der ersten Baugruppe 18 angeordnet, dass der Frontrahmen 22 mittels Schraubverbindungen 28 an dem Antriebsmotor 12 und der Ölwanne 14 befestigt ist. Zum präzisen Ausrichten der Baugruppen 18, 20, 26 zueinander bei der Montage ist zumindest ein Zentriermittel 30 vorgesehen. Das Zentriermittel 30 ist dabei zwischen der ersten Baugruppe 18 und der zweiten Baugruppe 20 in einer Zentrierposition 32 angeordnet, in der das Zentriermittel 30 jeweils in der ersten und zweiten Baugruppe 18, 20 teilweise angeordnet ist. Hierdurch kann eine präzise Ausrichtung der ersten und zweiten Baugruppe 18, 20, insbesondere quer zu einer Längsrichtung, bewirkt werden.

Gemäß der Erfindung ist das Zentriermittel 30 in einem montierten Zustand des Fahrgestells 10 von der Zentrierposition 32 in eine Demontageposition verbringbar, in welcher das Zentriermittel 30 nur in einer der Baugruppen 18, 20 aufgenommen ist. In Figur 2a ist das Zentriermittel 30 in der Zentrierposition 32 benachbart zu einer Schraubverbindung 28 angeordnet dargestellt. Das Zentriermittel 30 kann dabei in der Zentrierposition 32 einen Spalt 34 überbrücken, welcher beispielsweise zum Ausgleich von Toleranzen in Längsrichtung zwischen dem ersten und zweiten Bauteil 18, 20 ausgebildet sein kann. Zur Verlagerung ist das Zentriermittel 30 über eine Durchgangsbohrung 36 zugänglich. Die Durchgangsbohrung 36 (Fig. 2b) ist dabei in der ersten Baugruppe 18, insbesondere der Ölwanne 14, ausgebildet. Durch eine Abdeckung 38 ist die Durchgangsbohrung 36 verschließbar, um das Eindringen von Schmutz zu vermeiden.

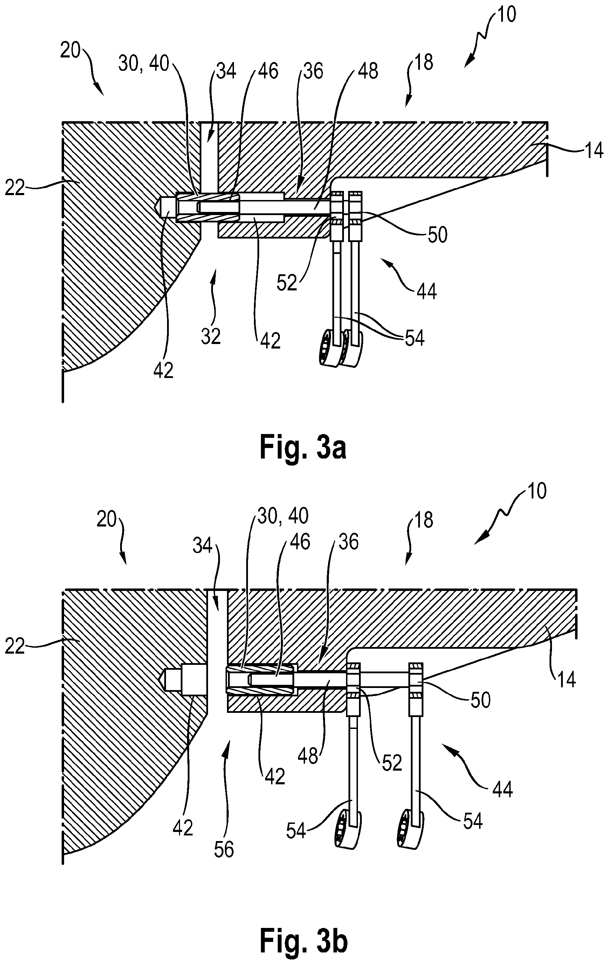

Das Zentriermittel 30 (Fig. 3a) kann beispielsweise einen rotationssymmetrischen Querschnitt aufweisen und in Form einer Hülse oder eines Zylinderstiftes 40 ausgebildet sein. Das Zentriermittel 30 in Form eines Zylinderstiftes 40 überbrückt in der Zentrierposition 32 den Spalt 34 zwischen der ersten und der zweiten Baugruppe 18, 20. Gelagert ist das Zentriermittel 30 dabei jeweils teilweise in einer Aussparung 42 der ersten und zweiten Baugruppe 18, 20, insbesondere in der Ölwanne 14 und dem Frontrahmen 22. Die Aussparung 42 in dem Frontrahmen 22 ist dabei in Form eines Sackloches ausgebildet, in welches das Zentriermittel 30 beispielsweise bei der Montage des Fahrgestells 10 gesteckt werden kann. Die Aussparung 42 in der Ölwanne ist dabei als Durchgangsbohrung 36 ausgebildet, welche Bereiche mit unterschiedlichen Durchmessern aufweist. Die Aussparung 42 in der ersten Baugruppe 18, insbesondere der Ölwanne 14, ist dabei derart ausgebildet, dass das Zentriermittel 30 zumindest an einem der zweiten Baugruppe 20 zugewandten Ende vollständig aufnehmbar ist. Die vollständige Aufnahme des Zentriermittels 30 in einer Baugruppe 18, 20, 26 in einem montierten Zustand des Fahrgestells 10 ermöglicht eine Demontage einzelner Bauteile 12, 14, 16, 22 einer Baugruppe 18, 20, 26 ohne dass das Fahrgestell 10 und/oder Baugruppen 18, 20, 26 vollständig demontiert werden müssen. Hierdurch kann beispielsweise eine Demontage und eine Reparatur oder Austausch der Ölwanne 14 erfolgen, ohne dass die erste Baugruppe 18 vollständig von dem Fahrgestell 10 getrennt werden muss.

Durch die Durchgangsbohrung 36 hindurch kann das Zentriermittel 30 mit einer Ziehvorrichtung 44 verbunden werden. Hierfür weist das Zentriermittel 30 ein Verbindungsprofil 46 auf, welche in Form eines Innengewindes ausgebildet ist. Ein Verbindungsprofil 46 kann dabei auch endseitig an dem Zentriermittel 30 angeordnet sein, um eine kraft- und/oder formschlüssige Verbindung mit einer Ziehvorrichtung 44 zu ermöglichen. Die dargestellte Ziehvorrichtung 44 ist in Form einer Schraube 48 ausgebildet, welche durch die Durchgangsbohrung 36 mit dem Verbindungsprofil 46, also dem Innengewinde, des Zentriermittels 30 verbunden ist. Die Schraube 48 weist endseitig einen Schraubenkopf 50 auf, und auf dem Gewinde der Schraube 48 ist eine Mutter 52 beweglich angeordnet. Der Schraubenkopf 50 und die Mutter 52 können durch Werkzeug 54, insbesondere Schraubenschlüssel, betätigt oder drehfest fixiert werden.

Die Mutter 50 in Figur 3b kann dabei mit der ersten Baugruppe 18, insbesondere der Ölwanne 14, in Anlage gebracht werden und bei gleichzeitigem drehfesten halten des Schraubenkopfes 52 kann die Schraube 48 und damit das Zentriermittel 30 aus der Durchgangsbohrung 36 heraus bewegt werden. Das Zentriermittel 30 ist dadurch bis zur vollständigen Aufnahme in der Aussparung 42 in der ersten Baugruppe 18, insbesondere der Ölwanne 14, verlagerbar und somit in eine Demontageposition 56 verbringbar. Durch lösen der Schraubverbindungen 28 kann somit Ölwanne 14 als einzelnes Bauteil der ersten Baugruppe 18 demontiert werden. Besonders vorteilhaft ist es, wenn bei einer anschließenden Montage beispielsweise der Ölwanne 14 diese vor einem festziehen der Schraubverbindungen 28 zunächst präzises zu den anderen Bauteilen 22 und/oder Baugruppen 18, 20 ausgerichtet wird. Dies kann durch eine Verlagerung des Zentriermittels 30 von der Demontageposition 56 in die Zentrierposition 32 erfolgen, wodurch das Bauteil 14 auch nach einer Demontage wieder präzise ausgerichtet werden kann.

Ein Zentriermittel 30 kann zumindest teilweise einen rotationsunsymmetrischen Querschnitt aufweisen, beispielsweise durch einen, zumindest abschnittsweise, ovalen oder eckigen Querschnitt. Dieser rotationsunsymmetrische Querschnitt kann mit der Aussparung 42 einer Baugruppe 18, 20, 26 formschlüssig zusammenwirken, um ein Verdrehen des Zentriermittels 30 zu vermeiden. Dies hat den Vorteil, dass beispielsweise das zweite Werkzeug 54 zum fixieren des Schraubenkopfes 50 entfallen könnte. Das Zentriermittel 30 kann einstückig oder mehrstückig ausgebildet sein, und beispielsweise zur Erzeugung eines rotationsunsymmetrischen Querschnittes umfangsseitig eine Passfeder aufweise, welche mit einer entsprechend ausgebildeten Aussparung 42 formschlüssig zusammen wirken kann. Eine alternative Ziehvorrichtung 44 kann in Form eines sogenannten Abziehwerkzeuges ausgebildet sein, welches ebenfalls über eine Schraubverbindung mit dem Zentriermittel 30 verbindbar ist. Zum Ziehen des Zentriermittels 30 wird jedoch ein Schlaggriff verwendet, welcher entlang des Abziehwerkzeuges bis zu einem Anschlag bewegt wird, wobei durch den Aufprall des Schlaggriffes auf den Anschlag das Abziehwerkzeug mit dem Zentriermittel aus einer Aussparung 42 herausgezogen werden kann.

### Bezugszeichenliste

- 10: Fahrgestell
- 12: Antriebsmotor
- 14: Ölwanne
- 16: Kupplungsgehäuse
- 18: erste Baugruppe
- 20: zweite Baugruppe
- 22: Frontrahmen
- 24: Getriebeblock
- 26: dritte Baugruppe
- 28: Schraubverbindung
- 30: Zentriermittel
- 32: Zentrierposition
- 34: Spalt
- 36: Durchgangsbohrung
- 38: Abdeckung
- 40: Zylinderstift
- 42: Aussparung
- 44: Ziehvorrichtung
- 46: Verbindungsprofil
- 48: Schraube
- 50: Schraubenkopf
- 52: Mutter
- 54: Werkzeug
- 56: Demontageposition

## Patentansprüche

1. Landwirtschaftliche Arbeitsmaschine, insbesondere Traktor, mit einem Fahrgestell (10), welches mindestens eine erste Baugruppe (18) und eine zweite Baugruppe (20) aufweist, wobei eine Baugruppe (18, 20, 26) jeweils mindestens ein Bauteil (12, 14, 16, 22, 24) umfasst, und wobei das Fahrgestell (10) mindestens ein Zentriermittel (30) aufweist, welches in einem montierten Zustand des Fahrgestells (10) in einer Zentrierposition (32) zwischen zwei aneinander angeordneten Baugruppen (18, 20, 26) angeordnet ist, wobei in der Zentrierposition (32) das Zentriermittel (30) jeweils zumindest teilweise in den aneinander angeordneten Baugruppen (18, 20, 26) in dafür ausgebildeten Aussparungen (42) aufgenommen ist, **dadurch gekennzeichnet, dass** das Zentriermittel (30) in dem montierten Zustand des Fahrgestells (10) von der Zentrierposition (32) in eine Demontageposition (56) verbringbar ist, in welcher das Zentriermittel (30) nur in einer der Baugruppen (18, 20, 26) aufgenommen ist, wobei das Zentriermittel (30) radial innenseitig und/oder endseitig ein Verbindungsprofil (46) aufweist, durch welches das Zentriermittel (30) mit einer Ziehvorrichtung (44) verbindbar ist.

2. Arbeitsmaschine nach Anspruch 1, **dadurch gekennzeichnet, dass** eine Aussparung (42) zur vollständigen Aufnahme des Zentriermittels (30) in einer der Baugruppen (18, 20, 26) als Durchgangsbohrung (36) ausgebildet ist.

3. Arbeitsmaschine nach Anspruch 1 oder 2, **dadurch gekennzeichnet, dass** das Zentriermittel (30) einen zumindest teilweise rotationssymmetrisch ausgebildeten Querschnitt aufweist, und insbesondere in Form einer Hülse oder eines Zylinderstiftes (40) ausgebildet ist.

4. Arbeitsmaschine nach einem der vorherigen Ansprüche, **dadurch gekennzeichnet, dass** das Zentriermittel (30) einen zumindest teilweise rotationsunsymmetrisch ausgebildeten Querschnitt aufweist.

5. Arbeitsmaschine nach einem der vorherigen Ansprüche, **dadurch gekennzeichnet, dass** das Zentriermittel (30) in einem montierten Zustand des Fahrgestells (10) von der Demontageposition (56) in die Zentrierposition (32) verlagerbar ist.

6. Arbeitsmaschine nach einem der vorherigen Ansprüche, **dadurch gekennzeichnet, dass** die Ziehvorrichtung (44) in Form einer Gewindestange, einer Schraube (48) oder in Form eines Abziehwerkzeuges, insbesondere mit einem Schlaggriff, ausgebildet ist.

7. Verfahren zur Demontage einer Baugruppe oder eines Bauteils einer Baugruppe eines Fahrgestells (10) einer landwirtschaftlichen Arbeitsmaschine, insbesondere nach einem der Ansprüche 1 bis 6, umfassend die Schritte
- Verbinden einer Ziehvorrichtung (44) mit jeweils einem in einer Zentrierposition (32) angeordneten Zentriermittel (30) eines Fahrgestells (30) einer landwirtschaftlichen Arbeitsmaschine;
- Verlagern des mindestens einen Zentriermittels (30) von der Zentrierposition (32) in eine Demontageposition (56);
- Demontieren der Baugruppe (18, 20, 26) und/oder eines Bauteils (12, 14, 16, 22) der Baugruppe (18, 20, 26).
- Verbinden einer Ziehvorrichtung (44) mit jeweils einem in einer Demontageposition (56) angeordneten Zentriermittel (30) des montierten Fahrgestells (10);
- Verlagern des mindestens einen Zentriermittels (30) von der Demontageposition (56) in die Zentrierposition (32).

## Claims

1. An agricultural working machine, in particular a tractor, comprising a chassis (10) which has at least a first assembly (18) and a second assembly (20), wherein an assembly (18, 20, 26) respectively has at least one component (12, 14, 16, 22, 24), and wherein the chassis (10) has at least one centring means (30) which in the assembled state of the chassis (10) is arranged a centring position (32) between two assemblies (18, 20, 26) arranged adjoining each other, wherein in the centring position (32) the centring means (30) is respectively at least partially received in the mutually adjoining assemblies (18, 20, 26) in recesses (42) provided for that purpose, **characterised in that** in the assembled state of the chassis (10) the centring means (30) can be moved from the centring position (32) into a dismantling position (56) in which the centring means (30) is received only in one of the assemblies (18, 20, 26), wherein the centring means (30) has radially inwardly and/or at the end a connecting profile (46), by which the centring means (30) can be connected to a pulling means (44).

2. A working machine according to claim 1 **characterised in that** a recess (42) for completely receiving the centring means (30) in one of the assemblies (18, 20, 26) is in the form of a through bore (36).

3. A working machine according to claim 1 or claim 2 **characterised in that** the centring means (30) is of an at least partially rotationally symmetrical cross-section and in particular is in the form of a sleeve or a cylindrical pin (40).

4. A working machine according to one of the preceding claims **characterised in that** the centring means (30) is of an at least partially rotationally asymmetric cross-section.

5. A working machine according to one of the preceding claims **characterised in that** in an assembled state of the chassis (10) the centring means (30) is moveable from the dismantling position (56) into the centring position (32).

6. A working machine according to one of the preceding claims **characterised in that** the pulling means (4) is in the form of a threaded rod, a screw (48) or in the form of an extraction tool, in particular with an impact handle.

7. A method of dismantling an assembly or a component of an assembly of a chassis (10) of an agricultural working machine, in particular according to one of claims 1 to 6, including the steps:
- connecting a pulling means (44) to a respective centring means (30), arranged in a centring position (32), of a chassis (30) of an agricultural working machine,
- displacing the at least one centring means (30) from the centring position (32) into a dismantling position (56),
- dismantling the assembly (18, 20, 26) and/or a component (12, 14, 16, 22) of the assembly (18, 20, 26),
- connecting a pulling means (44) to a respective centring means (30) of the assembled chassis (10), that is arranged in a dismantling position (56), and
- displacing the at least one centring means (30) from the dismantling position (56) into the centring position (32).

## Revendications

1. Machine de travail agricole, en particulier tracteur, comprenant un châssis (10) qui comporte au moins un premier groupe fonctionnel (18) et un second groupe fonctionnel (20), un groupe fonctionnel (18, 20, 26) comprenant au moins une partie fonctionnelle (12, 14, 16, 22, 24), et le châssis (10) comprenant au moins un moyen de centrage (30) qui, dans un état monté du châssis (10), est disposé dans une position centrée (32) entre deux groupes fonctionnels disposés l'un contre l'autre (18, 20, 26), dans la position centrée (32) le moyen de centrage (30) étant reçu au moins en partie dans les groupes fonctionnels disposés l'un contre l'autre (18, 20, 26) dans des évidements (42) ménagés à cet effet, **caractérisée en ce que**, dans l'état monté du châssis (10), le moyen de centrage (30) peut être déplacé d'une position centrée (32) vers une position de démontage (56) dans laquelle le moyen de centrage (30) n'est reçu que dans un des groupes fonctionnels (18, 20, 26), le moyen de centrage (30) comportant radialement à l'intérieur et/ou à son extrémité un profil de liaison (46) par l'intermédiaire duquel le moyen de centrage (30) peut être relié à un dispositif de serrage (44).

2. Machine de travail selon la revendication 1, **caractérisée en ce qu'**un évidement (42) est ménagé dans un des groupes fonctionnels (18, 20, 26) sous la forme d'un perçage débouchant (36) pour recevoir entièrement le moyen de centrage (30).

3. Machine de travail selon la revendication 1 ou 2, **caractérisée en ce que** le moyen de centrage (30) présente une section transversale conçue au moins en partie avec une symétrie de révolution et est conçu en particulier sous la forme d'un manchon ou d'une tige cylindrique (40).

4. Machine de travail selon une des revendications précédentes, **caractérisée en ce que** le moyen de centrage (30) présente une section transversale conçue au moins en partie sans symétrie de révolution.

5. Machine de travail selon une des revendications précédentes, **caractérisée en ce que**, dans un état monté du châssis (10), le moyen de centrage (30) est déplaçable de la position de démontage (56) vers la position centrée (32).

6. Machine de travail selon une des revendications précédentes, **caractérisée en ce que** le dispositif de serrage (44) est conçu sous la forme d'une tige filetée, d'une vis (48) ou sous forme d'outil de desserrage, en particulier avec une poignée de frappe.

7. Procédé de démontage d'un groupe fonctionnel ou d'une partie fonctionnelle d'un groupe fonctionnel d'un châssis (10) d'une machine de travail agricole, en particulier selon une des revendications 1 à 6, comprenant les étapes consistant à
- relier un dispositif de serrage (44) à un moyen de centrage (30), disposé en position centrée (32), d'un châssis (30) d'une machine de travail agricole ;
- déplacer le au moins un moyen de centrage (30) de la position centrée (32) vers une position de démontage (56) ;
- démonter le groupe fonctionnel (18, 20, 26) et/ou une partie fonctionnelle (12, 14, 16, 22) du groupe fonctionnel (18, 20, 26).
- relier un dispositif de serrage (44) à un moyen de centrage (30), disposé dans une position de démontage (56), du châssis monté (10) ;
- déplacer le au moins un moyen de centrage (30) de la position de démontage (56) vers la position centrée (32).
